# EUROPÄISCHE PATENTANMELDUNG

(11) **EP 4 438 407 A1**
(43) Veröffentlichungstag der Anmeldung: **02.10.2024**
(21) Anmeldenummer: 24167617.0
(22) Anmeldetag: 28.03.2024
(51) Int. Cl.: B60P 7/08, F16G 11/14, F16B 19/10, F16B 45/00

(54) **STECKANSCHLAGPUNKT MIT DREHEND BETÄTIGBAREM SPERRBOLZEN**

(30) Priorität: 31.03.2023 DE 102023108369
(71) Anmelder: RUD Ketten Rieger & Dietz GmbH u. Co. KG, 73432 Aalen (DE)
(72) Erfinder: Betzler, Michael, 73432 Aalen (DE); Geis, Jonas, 73432 Aalen (DE)
(74) Vertreter: Grünecker Patent- und Rechtsanwälte PartG mbB

(57) **Zusammenfassung**

Die Erfindung betrifft einen Steckanschlagpunkt (1), der einen Sperrbolzen (12), einen Sockel (8) und einen Halteabschnitt (6) aufweist. Der Sperrbolzen weist einen Schaft (13) auf, der in einer Einsteckrichtung (20) in ein Loch (18) eines Gegenstandes (2), beispielsweise einer Last, einsetzbar ist. Am Schaft ist wenigstens ein in radialer Richtung (14) ein- und ausfahrbarer Sperrkörper (16) vorgesehen. Der Sockel weist eine Auflagefläche (10) zur Anlage am Gegenstand auf. Vom Sockel weg erstreckt sich der Sperrbolzen in der Einsteckrichtung. Der Halteabschnitt dient zum Anbringen eines Anschlag-, Zurr- oder Hebemittels (4), beispielsweise eines Gurts, eines Seils oder einer Kette. Der Halteabschnitt befindet sich an der dem Sperrbolzen gegenüberliegenden Seite des Sockels. In einer Verriegelungsstellung (24) ist der wenigstens eine Sperrkörper des Sperrbolzens radial aus dem Schaft ausgefahren und in dieser Stellung verriegelt, so dass der Sperrbolzen in einer Hinterschneidung (22) des Loches (18) arretiert ist. Um den Steckanschlagpunkt einfach verriegeln, aber auch entriegeln zu können, weist der Sockel einen von Hand betätigbar angeordneten, zwischen der Verriegelungsstellung und einer Entriegelungsstellung gegenüber dem Halteabschnitt drehbaren Drehring (28) auf, der mechanisch mit dem Sperrbolzen und dem Sperrkörper verbunden ist. Durch die Verwendung eines solchen Drehrings wird das Risiko verringert, dass ein im Halteabschnitt angebrachtes Anschlag-, Hebe- oder Zurrmittel versehentlich den Sperrbolzen entriegelt.

## Beschreibung

Die Erfindung betrifft einen Steckanschlagpunkt mit einem Sperrbolzen.

Derartige Steckanschlagpunkte sind bekannt. Sie lassen sich mit Hilfe des Sperrbolzens schnell in ein Loch eines Gegenstandes einsetzen und sind rasch betriebsbereit. Mit Hilfe am Schaft in radialer Richtung ein- und ausfahrbarer Sperrkörper wird der Sperrbolzen an einer Hinterschneidung des Loches arretiert, so dass er entlang der Einsteckrichtung wirkende Kräfte sowie Querkräfte aufnehmen kann.

Das Loch kann sich an einer Last befinden, die dann mittels eines Anschlag- oder Hebemittels, das an einem Halteabschnitt des Steckanschlagpunkts angebracht werden kann, gehoben wird. Der Steckanschlagpunkt kann jedoch auch zum Festzurren von Lasten mittels eines Zurrmittels dienen, wenn er beispielsweise in einer die Last tragenden Lastfläche eingesetzt ist. Eine solche Lastfläche kann beispielsweise ein Auflieger eines LKWs, eines Schiffes oder eines Güterwaggons sein. Als Anschlag-, Hebe- oder Zurrmittel dienen beispielsweise Ketten, Seile oder Gurte.

Damit der Steckanschlagpunkt seinem Einsatzzweck entsprechend schnell montiert werden kann, muss er einfach zu bedienen sein. Gleichzeitig muss aber der Verriegelungsmechanismus, der den wenigstens einen Sperrkörper verriegelt, ausreichend gegen eine zufällige Betätigung während des Betriebs gesichert sein, um zu verhindern, dass der Sperrbolzen unter Last aus dem Loch rutscht.

Folglich ist es Aufgabe der Erfindung einen schnell zu montierenden Steckanschlagpunkt bereitzustellen, der eine hohe Betriebssicherheit aufweist.

Diese Aufgabe wird erfindungsgemäß gelöst durch einen Steckanschlagpunkt mit einem Sperrbolzen, der einen in einer Einsteckrichtung in ein Loch, beispielsweise eine Bohrung, eines Gegenstands einsetzbaren Schaft und am Schaft wenigstens einen in radialer Richtung ein- und ausfahrbaren Sperrkörper aufweist; mit einem Sockel, der eine Auflagefläche zur Anlage am Gegenstand aufweist und von dem sich der Sperrbolzen in der Einsteckrichtung weg erstreckt; und mit einem Halteabschnitt zum Anbringen eines Anschlag-, Zurr- oder Hebemittels, der sich an der dem Sperrbolzen gegenüberliegenden Seite des Sockels befindet; wobei der Sockel einen von Hand betätigbar angeordneten, zwischen einer Verriegelungsstellung und einer Entriegelungsstellung gegenüber dem Sperrbolzen drehbaren Drehring aufweist, der mechanisch mit dem Sperrbolzen verbunden ist; und wobei in der Verriegelungsstellung der wenigstens eine Sperrkörper des Sperrbolzens radial ausgefahren verriegelt ist.

Der so ausgestaltete Steckanschlagpunkt ist leicht zu bedienen, denn zum Ent- und Verriegeln des Sperrbolzens muss lediglich der Drehring gedreht werden. Gleichzeitig ist der Sperrbolzen besser gegen eine unbeabsichtigte Betätigung, beispielsweise durch ein im Halteabschnitt angebrachtes Anschlag-, Zurr- oder Hebemittel, geschützt als dies beispielsweise bei dem Sperrbolzen der DE 20 2019 106 030 U1 der Fall ist. Dieser bekannte Sperrbolzen wird nämlich durch einen Druckknopf betätigt, der sich im Haltebereich befindet. Bei dieser Anordnung besteht Gefahr, dass der Druckknopf durch ein schweres Anschlag-, Zurr- oder Hebemittel wie beispielsweise eine Kette, versehentlich bedient wird.

Die Einsteckrichtung des Steckanschlagpunktes fällt bevorzugt mit einer Längsrichtung des Schaftes zusammen.

Der oben beschriebene Sperrbolzen kann durch die folgenden Merkmale, die jeweils für sich vorteilhaft und beliebig miteinander kombinierbar sind, weiter verbessert werden.

So kann der Sperrbolzen in einer Ausgestaltung des Steckanschlagpunktes eine im Schaft drehbar aufgenommene Verriegelungswelle aufweisen, die über einen Mitnehmer mit dem Drehring verbunden und durch diesen drehbar angetrieben ist. Der Mitnehmer verbindet in einer Ausgestaltung den Drehring und die Verriegelungswelle drehstarr miteinander. Somit führt eine Drehung der Verriegelungswelle zu einer Drehung des Drehringes und umgekehrt eine Drehung des Drehringes auch zu einer Drehung der Verriegelungswelle. Der Mitnehmer kann ein einfacher Stift sein, der in den Drehring und in die Verriegelungswelle eingesteckt ist.

Alternativ kann im Schaft die Verriegelungswelle auch verschieblich angeordnet sein, wobei dann zwischen dem Drehring und der Verriegelungswelle ein Getriebeelement, beispielsweise in Form einer Kulisse, angeordnet sein muss, das die Drehbewegung des Drehringes in eine Hubbewegung der Verriegelungswelle umsetzt.

Die Drehachse der Verriegelungswelle verläuft parallel zur Längserstreckung des Schaftes. Die Ver- und Entriegelung des wenigstens einen Sperrkörpers mittels einer drehbaren Verriegelungswelle ist konstruktiv einfach umzusetzen. Die Verriegelungswelle kann mit einem Nockenabschnitt versehen sein, der bei Drehung den wenigstens einen Sperrkörper radial nach außen drückt. In einer Ebene quer zur Einsteckrichtung ändert sich der Radius des Nockenabschnittes in Umfangsrichtung. An der Stelle eines großen Radius wird der wenigstens eine Sperrkörper radial nach außen gedrückt. An der Stelle eines kleinen Radius kann sich demgegenüber der wenigstens eine Sperrkörper nach radial innen bewegen.

Der Nockenabschnitt weist in einer Ebene quer zur Einsteckrichtung bevorzugt einen um die Einsteckrichtung nicht rotationssymmetrischen Querschnitt auf. Der Nockenabschnitt kann beispielsweise einen zumindest abschnittsweise nockenförmigen, einen zumindest abschnittsweise exzenterförmigen und/oder einen zumindest abschnittsweise polygonalen, beispielsweise rechteckigen Querschnitt aufweisen. Bei einem polygonalen Querschnitt sind bevorzugt jedem Sperrkörper zwei Polygonflächen zugeordnet, wobei jeder Sperrkörper an der einen, weiter von der Drehachse der Verriegelungswelle entfernten Polygonfläche in der Verriegelungsstellung und an der anderen, näher an der Drehachse der Verriegelungswelle liegenden Polygonfläche in der Entriegelungsstellung anliegt.

Der Nockenabschnitt ist bevorzugt drehbar gegenüber dem Schaft bzw. dem Sperrbolzen, während der wenigstens eine Sperrkörper gegenüber dem Schaft bzw. dem Sperrbolzen nicht drehbar, sondern lediglich in radialer Richtung verschieblich ist. Folglich ist der Nockenabschnitt auch relativ zu dem wenigstens einen Sperrkörper drehbar. Die Konturänderung des Nockenabschnittes in Umfangsrichtung bewirkt somit wenigstens das Ausfahren des wenigstens einen Sperrkörpers in radialer Richtung.

Bevorzugt ist der wenigstens eine Sperrkörper zwangsgeführt, so dass er durch die Bewegung der Verriegelungswelle, insbesondere des Nockenabschnittes, in radialer Richtung sowohl einals auch ausgefahren wird. Dies kann dadurch erreicht werden, dass der wenigstens eine Sperrkörper permanent gegen die Verriegelungswelle bzw. den Nockenabschnitt gedrückt ist, so dass er bei der Drehung des Nockenabschnittes gegenüber dem Sperrkörper dessen Kontur folgt. Ein Andrücken des wenigstens einen Sperrkörpers gegen den Nockenabschnitt kann mittels einer Magnetkraft und/oder mittels Federkraft erfolgen. So kann beispielsweise eine Andrückfeder vorgesehen sein, die sich zwischen dem Schaft und dem wenigstens einem Sperrkörper abstützt, so dass der Sperrkörper zwischen der Feder und der Verriegelungswelle liegt, und den Sperrkörper gegen den Nockenabschnitt drückt. Alternativ oder kumulativ kann die Verriegelungswelle und/oder der wenigstens eine Sperrkörper magnetisch sein und/oder einen Magnet aufweisen, der eine magnetische Anziehung zwischen dem wenigstens einen Sperrkörper und der Verriegelungswelle bewirkt.

Gemäß einer weiteren vorteilhaften Ausgestaltung können eine Gleitfläche des Nockenabschnittes, an der der wenigstens eine Sperrkörper in der Verriegelungsstellung anliegt, und die an der Gleitfläche anliegende Fläche des wenigstens einen Sperrkörpers komplementär zueinander ausgestaltet sein und zusammen einen in Drehrichtung der Verriegelungswelle wirkenden Formschluss erzeugen. Dieser Formschluss sichert den wenigstens einen Sperrkörper in der Verriegelungsstellung, da zunächst eine erhöhte Kraft aufgebracht werden muss, um den Formschluss zu überwinden und die Verriegelungswelle aus der Verriegelungsstellung zu bewegen.

Beispielsweise können die beiden komplementären Flächen von Nockenabschnitt und wenigstens einem Sperrkörper plane Flächen sein. Alternativ kann eine Fläche konvex und die andere Fläche dazu komplementär konkav ausgestaltet sein.

In der Entriegelungsstellung kann der wenigstens eine Sperrkörper am weitesten in den Schaft bewegt werden bzw. ist der wenigstens eine Sperrkörper am weitesten in den Schaft bewegt. Zwischen der Entriegelungsstellung und der Verriegelungsstellung können weitere Stellungen liegen, in denen der wenigstens eine Sperrkörper weniger weit als in der Entriegelungsstellung in den Schaft gedrückt werden kann.

Der Steckanschlagpunkt kann ferner eine Feder aufweisen, die in Richtung der Verriegelungsstellung wirkt, so dass die Verriegelungsstellung selbsttätig vom Sperrbolzen eingenommen wird, wenn der Drehring ansonsten kraftfrei ist. Die Feder kann unmittelbar auf den Drehring und/oder die Verriegelungswelle wirken. Die Feder kann beispielsweise als eine Schenkelfeder ausgestaltet sein. Sie kann ein auf die Verriegelungswelle wirkendes Drehmoment erzeugen, das in Richtung einer der Verriegelungsstellung entsprechenden Winkelposition der Verriegelungswelle gerichtet ist.

Um das Herausziehen eines vormals montierten Steckanschlagpunktes aus dem Loch zu erleichtern, kann derwenigstens eine Sperrkörper in und/oder entgegen der Einsteckrichtung mit jeweils einer Fase versehen sein. Die Fase kann sich in radialer Richtung über mehr als die Hälfte der Länge des wenigstens einen Sperrköpers in radialer Richtung erstrecken.

In der Entriegelungsstellung kann der wenigstens eine Sperrkörper mithilfe einer Fase beim Eintritt in das Loch des Gegenstandes radial nach innen gedrückt werden. Eine entgegen der Einsteckrichtung weisende Fase kann den wenigstens einen Sperrkörper in radialer Richtung in den Schaft zurückdrücken, wenn der Steckanschlagpunkt entgegen der Einsteckrichtung aus dem Gegenstand gezogen wird. In diesem Fall drückt die Hinterschneidung den wenigstens einen Sperrkörper über die entgegen der Einsteckrichtung weisende Fase zurück in den Schaft. Eine in Einsteckrichtung weisende Fase drückt den wenigstens einen Sperrkörper in der Entriegelungsstellung nach radial innen, sobald der wenigstens eine Sperrkörper in Einsteckrichtung in das Loch des Gegenstandes eingesetzt wird.

Die entgegen der Einsteckrichtung, zum Sockel hinweisenden Fasen sollten möglichst flächig am Übergang zwischen der Hinterschneidung und dem Loch anliegen. Dadurch werden an dieser Stelle, an der der sich in der Verriegelungsstellung befindliche Sperrbolzen entgegen der Einsteckrichtung arretiert und gehalten ist, zu hohe punktuelle Spannungen vermieden, wenn auf den Steckanschlagpunkt eine Zugkraft wirkt.

Eine flächige Auflage kann dadurch erreicht werden, dass die zum Sockel hin gelegene Fase des wenigstens einen Sperrkörpers, also die Fase auf einer Oberseite des wenigstens einen Sperrkörpers, zumindest abschnittsweise ballig, beispielsweise kalottenförmig ausgebildet ist.

Die in Einsteckrichtung liegende bzw. vom Sockel wegweisende Fase kann gemäß einer Ausgestaltung gegenüber der Längsrichtung ebenfalls ballig ausgestaltet sein. Sie kann weniger stark zur Längsrichtung des Schaftes geneigt sein als die zum Sockel weisende Fase.

Der Nockenabschnitt ist in einer vorteilhaften Ausgestaltung Teil eines Nockentriebes, der die insbesondere rotatorische Bewegung der Verriegelungswelle in eine Bewegung des wenigstens einen Sperrkörpers umsetzt. Bevorzugt ist der Nockentrieb zumindest in der Verriegelungsstellung und/oder in einem sich an die Verriegelungsstellung anschließenden Bereich von Stellungen der Verriegelungswelle selbstsichernd ausgestaltet. In dieser Ausgestaltung ist beispielsweise die Verriegelungswelle in und/oder um die Verriegelungsstellung durch eine Kraft, die auf den wenigstens einen Sperrkörper in radialer Richtung nach innen wirkt, in die Verriegelungsstellung gedrückt. Dadurch kann sich die Verriegelungsstellung im Betrieb durch eine Belastung des wenigstens einen Sperrkörpers nicht lösen. Dies gilt insbesondere dann, wenn der wenigstens eine Sperrkörper eine Fase aufweist, durch die bei einer axialen Belastung des Schaftes eine radial nach innen gerichtete Kraftkomponente aufweist. Der Nockentrieb ist also selbsttätig in der Verriegelungsstellung gesichert.

Bevorzugt ist der Nockentrieb über einen durchgängigen Bereich von Stellungen der Verriegelungswelle selbstsichernd, wobei sich der Bereich der Selbstsicherung von der Verriegelungsstellung zur Entriegelungsstellung erstreckt. Bevorzugt erstreckt sich der Bereich, in der der Nockentrieb selbstsichernd ist, über wenigstens die Hälfte des Bereichs, den die Verriegelungswelle bei ihrer Bewegung von der Verriegelungsstellung in die Entriegelungsstellung überstreicht. Ist beispielsweise für die Bewegung der Verriegelungswelle von der Verriegelungsstellung in die Entriegelungsstellung eine Drehung um einen vorbestimmten Winkel, z.B. 90°, erforderlich, so erstreckt sich der Bereich der Selbstsicherung ausgehend von der Stellung der Verriegelungswelle über einen Teil des vorbestimmten Winkels, z.B. 45°, in Richtung der Entriegelungsstellung. Der Bereich der Selbstsicherung bietet Sicherheit, dass selbst ein nicht ordnungsgemäß verriegelter Steckanschlagpunkt noch Lasten aufnehmen kann. Außerdem ist durch die Selbstsicherung insbesondere in Zusammenwirkung mit einer Fase wie oben beschrieben gewährleistet, dass ein belasteter Steckanschlagpunkt nicht entriegelt werden kann.

Gemäß einer weiteren Ausgestaltung ist der Nockentrieb zumindest in der Entriegelungsstellung und/oder in einem sich an die Entriegelungsstellung anschließenden Bereich von Stellungen der Verriegelungswelle selbstöffnend ausgestaltet. In dieser Ausgestaltung ist beispielsweise die Verriegelungswelle in und/oder um die Entriegelungsstellung durch eine Kraft, die auf den wenigstens einen Sperrkörper in radialer Richtung nach innen wirkt, in die Entriegelungsstellung gedrückt. Dadurch können die Sperrkörper durch eine solche Kraft selbsttätig in den Schaft gedrückt werden, was das Herausziehen des Schaftes aus dem Loch erleichtert. Der Bereich von Stellungen, in der der Nockentrieb selbstöffnend ist, sollte von der Verriegelungsstellung beabstandet sein bzw. zumindest diese nicht beinhalten. Bevorzugt schließt sich der Bereich, in dem der Nockentrieb selbstöffnend ist, an den Bereich, in dem der Nockentrieb selbstsichernd ist, an, wobei beide Bereich auch voneinander beabstandet sein können.

Der Sperrkörper kann ferner eine in radialer Richtung nach außen weisende Stirnfläche aufweisen, die zumindest abschnittsweise zylindermantelförmig ausgebildet sein kann, so dass sie sich besser in das Loch und/oder die Hinterschneidung einfügt. Zudem hat eine abschnittsweise zylindermantelförmige Stirnfläche den Vorteil, dass der Sperrkörper in der Entriegelungsstellung nicht soweit in den Schaft zurückgedrückt werden muss, wenn kein Überstand erzeugt werden soll. Bevorzugt folgt Außenkontur der Stirnfläche der Außenkontur des Schaftes, beide können denselben Radius aufweisen.

Bevorzugt ist der wenigstens eine Sperrkörper keine Kugel, sondern ein Polyeder mit wenigstens einigen runden bzw. balligen Flächen.

Der wenigstens eine Sperrkörper kann in eine Schaftöffnung des Schafts eingesetzt sein. Die Schaftöffnung kann abgedrückt sein. Durch die Abdrückung des Schaftes kann eine Rotation um eine radiale Rotationsachse des wenigstens einen Sperrkörpers in der Schaftöffnung formschlüssig blockiert sein. Durch die Abdrückung kann der Sperrkörper insbesondere ausschließlich translatorisch geführt sein. Des Weiteren kann die Abdrückung mit dem Sperrkörper formschlüssig zusammenwirken, um ihn unverlierbar in der Schaftöffnung zu halten.

Der Drehring ist bevorzugt in Einsteckrichtung vom Halteabschnitt beabstandet. Der Drehring grenzt insbesondere nicht an ein Auge des Halteabschnittes an, in das Hebe-, Anschlag- oder Zurrmittel eingehängt werden können. Bevorzugt liegt ein Gehäuse des Sockels zwischen dem Halteabschnitt und dem Drehring. Am Gehäuse kann der Drehring drehbar gelagert sein. Je weiter der Drehring vom Halteabschnitt beabstandet ist und je mehr Elemente des Steckanschlagpunktes zwischen Halteabschnitt und Drehring angeordnet sind, umso besser ist der Drehring gegen Fehlbedienung gesichert. Das Gehäuse kann den Drehring in einer Ausgestaltung zum Halteabschnitt hin zumindest nahezu vollständig abdecken. Ein kleiner Rand des Drehringes von höchstens einem oder zwei Millimeter kann in radialer Richtung aus dem Gehäuse vorstehen.

Gemäß einer weiteren vorteilhaften Ausgestaltung kann der Steckanschlagpunkt eine mechanisch betätigte Statusanzeige aufweisen, die ausgestaltet ist, in der Verriegelungsstellung ein optisches Statussignal zu erzeugen, das in einer Entriegelungsstellung, in der der wenigstens eine Sperrkörper in den Schaft einfahrbar ist, nicht sichtbar ist. Alternativ oder kumulativ kann die Statusanzeige ausgestaltet sein, in der Entriegelungsstellung ein optisches Statussignal zu erzeugen, das in der Verriegelungsstellung nicht sichtbar ist.

Mittels der Statusanzeige kann ein Benutzer auf einfache Weise überprüfen, ob die Verriegelungsstellung oder die Entriegelungsstellung eingenommen ist. Auf diese Weise lässt sich vermeiden, dass ein versehentlich nicht in der Hinterschneidung verriegelter Anschlagpunkt belastet wird, was ansonsten zu Sach- oder Personenschäden führen könnte.

Die mechanisch betätigte Statusanzeige kann mit dem Drehring und/oder der Verriegelungswelle bewegungsübertragend verbunden sein, um das Statussignal zu ändern. Ein Teil der Statusanzeige kann unmittelbar am Drehring oder vom Drehring ausgebildet sein.

In einer Ausgestaltung kann die Statusanzeige eine Referenzmarkierung und eine relativ zur Referenzmarkierung bewegliche Markierungsfläche mit einer ersten Markierung und einer zweiten Markierung aufweisen. In der Verriegelungsstellung befindet sich beispielsweise die erste Markierung und in der Entriegelungsstellung die zweite Markierung an der Referenzmarkierung. Entweder die Markierungsfläche oder die Referenzmarkierung kann mit dem Drehring oder der Verriegelungswelle bewegungsübertragend verbunden sein. Ist die Markierungsfläche mit dem Drehring bewegungsübertragend verbunden, so ist die Markierungsfläche bevorzugt an einem Gehäuse des Sockels angebracht, so dass sie sich nicht mit dem Drehring oder der Verriegelungswelle mitdreht. Alternativ kann auch die Referenzmarkierung am Gehäuse des Sockels und die Markierungsfläche am Drehring angeordnet oder mit dem Drehring bewegungsübertragend verbunden sein. Die Markierungsfläche kann auch Teil des Drehrings sein.

Die Referenzmarkierung kann beispielsweise als ein Sichtfenster ausgestaltet sein, unter dem bzw. durch das hindurch die erste oder die zweite Markierung sichtbar ist. Die Größe des Sichtfensters kann hierbei zumindest in etwa der Größe der ersten und/oder zweiten Markierung entsprechen, so dass die Markierungen nur in der Verriegelungsstellung und in der Entriegelungsstellung gut zu erkennen sind. Anstelle eines Sichtfensters kann die Referenzmarkierung auch als ein Zeiger oder gabelförmig ausgestaltet sein.

Die Markierungsfläche kann als ein Bereich des Drehrings ausgestaltet sein, dessen Oberflächenstruktur oder -farbe sich von seiner unmittelbaren Umgebung unterscheidet. Die Oberflächenstruktur der ersten Markierung kann sich hinsichtlich Struktur und/oder Farbe von der Oberfläche der zweiten Markierung unterscheiden, so dass beide Markierungen visuell voneinander unterscheidbar sind. Zwischen der ersten und zweiten Markierung kann sich ein Zwischenbereich erstrecken, dessen Oberfläche sich wiederum von der Oberfläche der ersten und zweiten Markierung unterscheiden kann. Dieser Zwischenbereich ist den Positionen der Verriegelungswelle zugeordnet, die diese zwischen der Entriegelungsstellung und der Verriegelungsstellung einnimmt.

Bevorzugt ist die Statusanzeige von der Seite des Haltebereichs aus und/oder in radialer Richtung mit Blick auf eine Umfangsfläche des Drehrings einsehbar. Dies erlaubt die Überprüfung der Statusanzeige bei eingestecktem Steckanschlagpunkt durch eine Bedienperson aus einer Vielzahl von Blickwinkeln.

Der Steckanschlagpunkt ist üblicherweise nur für den Gebrauch in Löchern zugelassen, deren Innendurchmesser in einem bestimmten, zulässigen Bereich liegt und bei denen die Hinterschneidung ebenfalls nur in einem bestimmten Bereich von Abständen vom Eintritt in das Loch entfernt ist. Eine Verwendung des Steckanschlagpunktes in Löchern, deren Abmessungen nicht in den zugelassenen Bereichen liegt, stellt keine bestimmungsgemäße Verwendung im Sinne der Maschinenrichtlinie 2006/42/EG dar.

Für den bestimmungsgemäßen Gebrauch eines Steckanschlagpunktes darf die Hinterschneidung weder zu nah an der sockelseitigen Eintrittsöffnung des Loches liegen, noch zu weit von dieser Eintrittsöffnung entfernt sein. Befindet sich die Hinterschneidung zu nah an der Eintrittsöffnung in das Loch, so wird der Steckanschlagpunkt unter Zugbelastung zu weit aus dem Loch herausgezogen. Wirkt in dieser Stellung zusätzlich eine Kraftkomponente in radialer Richtung, so wirkt ein starkes Biegemoment auf den Schaft, welches den Verriegelungsmechanismus der Sperrkörper oder den Schaft beschädigen kann. Außerdem ist der Steckanschlagpunkt in diesem Fall in Längsrichtung in dem Loch über einen großen Hub hin und her beweglich, was zu einer hohen dynamischen Belastung des wenigstens einen Sperrkörpers führen kann, wenn er gegen die Hinterschneidung schlägt.

Ist die Hinterschneidung dagegen zu weit von der Eintrittsöffnung entfernt, so erreicht der wenigstens eine Sperrkörper selbst bei vollständig in das Loch eingesetztem Schaft nicht mehr die Hinterschneidung. Der Sperrbolzen kann nicht im Loch verriegelt werden.

Die letztere Situation kann ein Benutzer anhand der Statusanzeige feststellen. Ist nämlich die Hinterschneidung zu weit von der Eintrittsöffnung entfernt, so kann der wenigstens eine Sperrkörper bei vollständig in das Loch eingesetztem Steckanschlagpunkt nicht die Verriegelungsstellung einnehmen. Entsprechend zeigt die Statusanzeige nicht das der Verriegelungsstellung entsprechende Signal an. Mithilfe der Statusanzeige lässt sich also überprüfen, ob die Hinterschneidung um mehr als eine zulässige Maximaltiefe von der Eintrittsöffnung des Loches entfernt ist.

Um festzustellen, ob die Hinterschneidung in einer zulässigen Mindesttiefe angeordnet ist, kann der Schaft zwischen dem wenigstens einen Sperrkörper und der Auflagefläche außen mit einer Einstecktiefen-Markierung versehen sein, die sich in Einsteckrichtung näher an der Auflagefläche als an dem wenigstens einen Sperrkörper befindet. Der Abstand der Einstecktiefen-Markierung in Einsteckrichtung von dem wenigstens einen Sperrkörper, insbesondere der dem Sockel in der Verriegelungsstellung am nächsten liegenden Stelle des wenigstens einen Sperrkörpers, entspricht vorteilhafterweise der Mindesttiefe.

Mithilfe der Einstecktiefen-Markierung am Schaft kann ein Benutzer ohne zusätzliches Werkzeug feststellen, ob sich die Hinterschneidung unzulässig nahe an der Eintrittsöffnung befindet. Er muss hierzu lediglich den Steckanschlagpunkt in das Loch vollständig einführen, bis die Verriegelungsstellung eingenommen wird. Anschließend wird der Steckanschlagpunkt entgegen der Einsteckrichtung so weit wie möglich aus dem Loch herausgezogen, also bis der wenigstens eine Sperrkörper an die Hinterschneidung anschlägt. Ist dann die Einstecktiefen-Messmarkierung am Schaft sichtbar, so befindet sich die Hinterschneidung zu nahe an der Eintrittsöffnung, die Mindesttiefe ist unterschritten. Eine Verwendung des Steckanschlagpunktes in diesem Loch wäre, für den Benutzer sofort erkennbar, nicht mehr bestimmungsgemäß.

Für den sicheren und bestimmungsgemäßen Gebrauch des Steckanschlagpunktes kann nicht nur die Tiefe, in der sich die Hinterschneidung im Loch befindet, maßgeblich sein, sondern auch der Durchmesser des Loches. In ein Loch mit einem zu kleinen Durchmesser kann der Schaft nicht eingesteckt werden. Ist der Innendurchmesser des Loches größer als ein zulässiger Maximaldurchmesser, so ist der Steckanschlagpunkt im Loch in radialer Richtung verschieblich. Eine zu große Beweglichkeit des Schaftes im Loch kann auch hier zu hohen dynamischen Lasten führen, für die der Schaft nicht ausgelegt ist. Zudem kann bei einem zu großen Innendurchmesser des Loches die Auflagefläche zwischen den Sperrkörpern und der Hinterschneidung zu klein werden, um hohe Kräfte aufzunehmen.

Um einem Benutzer zu ermöglichen, ohne zusätzliches Werkzeug zu überprüfen, ob ein Loch einen Innendurchmesser aufweist, der noch im zulässigen Bereich für einen bestimmungsgemäßen Gebrauch liegt, kann der Steckanschlagpunkt, insbesondere der Schaft, eine Durchmessergrenzlehre aufweisen, die zur Prüfung eines Innendurchmessers des Loches ausgebildet ist. Die Durchmessergrenzlehre kann eine mechanisch betätigte Durchmesseranzeige aufweisen, die ein vom Innendurchmesser des Loches abhängiges optisches Signal anzeigt. Beispielsweise kann die Durchmesseranzeige ausgestaltet sein, ein erstes Signal zu erzeugen, wenn der Innendurchmesser des Loches größer ist als der zulässige Maximaldurchmesser des Loches.

Bevorzugt ist der wenigstens eine Sperrkörper Teil der Durchmessergrenzlehre. Sie werden in einer Ausgestaltung zur Abtastung des Innendurchmessers des Loches verwendet.

Gemäß einer weiteren Ausgestaltung kann der Steckanschlagpunkt eine Messmarkierung und eine relativ zur Messmarkierung bewegliche Messreferenzmarkierung aufweisen. Die relative Position von Messmarkierung und Messreferenzmarkierung ist bevorzugt von der Position der Verriegelungswelle abhängig.

So kann sich die Messmarkierung an der Messreferenzmarke befinden, wenn der wenigstens eine Sperrkörper um einen vorbestimmten Betrag aus dem Schaft ausgefahren ist. Die Übereinstimmung von Messmarkierung und Messreferenzmarkierung signalisiert dem Benutzer, dass der Durchmesser des Sperrbolzens an der Stelle des wenigstens einen Sperrkörpers einen bestimmten Wert erreicht hat. Insbesondere kann bei um den vorbestimmten Betrag ausgefahrenem wenigstens einem Sperrkörper der Durchmesser des Sperrbolzens an der Stelle des wenigstens einen Sperrkörpers dem maximal zulässigen Innendurchmesser des Loches entsprechen. Dies bedeutet, dass, wenn sich die erste Messmarkierung an der Messreferenzmarke befindet, der maximal zulässige Innendurchmesser des Loches vorliegt.

Die Messmarkierung kann an einem Ende eines Messmarkierungsbereichs liegen. Der Messmarkierungsbereich kann eine gegenüber seiner unmittelbaren Umgebung unterschiedliche Oberflächenstruktur oder -farbe aufweisen. Er kann auch beispielsweise als eine Aussparung oder Einbuchtung ausgestaltet sein. Ist der Durchmesser des Sperrbolzens an der Stelle des wenigstens einen Sperrkörpers kleiner als der maximal zulässige Innendurchmesser des Loches, weil der wenigstens eine Sperrkörper weniger weit ausgefahren ist, so liegt die Messreferenzmarke bevorzugt im Messmarkierungsbereich.

Der Messmarkierungsbereich zeigt also den Bereich erlaubter Innendurchmesser an, bei denen eine bestimmungsgemäße Verwendung des Steckanschlagpunktes vorliegt. Liegt die Messreferenzmarkierung nicht mehr im Messmarkierungsbereich, so weist das Loch einen Innendurchmesser auf, der größer als der maximal zulässige Innendurchmesser ist.

Die Messmarkierung bzw. der Messmarkierungsbereich können mit dem Drehring bewegungsübertragend verbunden oder am Drehring angebracht sein. Die Messmarkierung und der Messmarkierungsbereich können jedoch auch am Gehäuse des Sockels angebracht oder insbesondere integraler Teil des Gehäuses des Sockels sein. Die Messreferenzmarkierung ist in ersterem Fall am Gehäuse des Sockels angebracht oder integraler Teil desselben, in letzterem Fall mit dem Drehring bewegungsübertragend verbunden oder insbesondere integraler Teil des Drehrings. Die Messreferenzmarkierung und der Messmarkierungsbereich können von denselben Elementen ausgebildet sein, die die erste und zweite Markierung der Statusanzeige sowie die Referenzmarkierung aufweisen. Beispielsweise können die Messmarkierung und die Messreferenzmarkierung in Drehrichtung beabstandet von der Statusanzeige sein.

Bevorzugt sind die Messmarkierung und die Messreferenzmarkierung von radial außen und von der Seite des Halteelements einsehbar.

Ein der Messmarkierung in Drehrichtung gegenüberliegendes Ende des Messmarkierungsbereichs kann eine zweite Messmarkierung bilden, die einem minimal zulässigen Innendurchmesser des Loches zugeordnet sein kann. Befindet sich die zweite Markierung an der Messreferenzmarkierung, so ist der wenigstens ein Sperrkörper um einen Betrag aus dem Schaft ausgefahren, der an der Stelle des wenigstens einen Sperrkörpers zu einem Durchmesser des Sperrbolzens führt, der dem minimal zulässigen Innendurchmesser entspricht.

Ein solcher minimal zulässiger Innendurchmesser kann geringfügig größer als der Außendurchmesser des Schaftes sein, um sicherzustellen, dass der Schaft im Loch einen Mindestgrad an Beweglichkeit aufweist und somit einfach zu entfernen ist. Außerdem kann so sichergestellt sein, dass noch etwas Reserve vorhanden ist, um die der wenigstens eine Sperrkörper weiter eingefahren werden kann.

Die Anzahl der Sperrkörper ist beliebig. Anstelle nur eines Sperrkörpers kann der Schaft auch mehrere, beispielsweise zwei oder drei Sperrkörper, aufweisen. Sind mehrere Sperrkörper vorhanden, so sind diese bevorzugt in Umfangsrichtung gleich weit voneinander beabstandet.

Im Folgenden ist die Erfindung anhand von Ausführungsbeispielen und mit Bezug auf die beigefügten Figuren exemplarisch näher erläutert. Dabei kann nach Maßgabe der obigen Ausführungen auf einzelne Merkmale verzichtet werden, wenn es bei einer bestimmten Anwendung nicht auf die mit diesem Merkmal verknüpften Vorteile ankommt. Umgekehrt kann ein oben beschriebenes Merkmal einem nachstehend beschriebenen Ausführungsbeispiel hinzugefügt werden, sollte es bei einer bestimmten Anwendung auf den mit diesem Merkmal verknüpften Vorteil ankommen.

In den Figuren und in der nachstehenden Beschreibung sind für Elemente, die einander hinsichtlich Funktion und/oder Aufbau entsprechen, dieselben Bezugszeichen verwendet.

Es zeigen:
- Fig. 1: eine schematische Darstellung eines an einem Gegenstand montierten Steckanschlagpunktes;
- Fig. 2: eine schematische und perspektivische Schnittdarstellung des Steckanschlagpunktes der Fig. 1 in einem anderen Gegenstand;
- Fig. 3: eine schematische Perspektivdarstellung des Steckanschlagpunktes der Fig. 1 in einer Verriegelungsstellung;
- Fig. 4: eine schematische Perspektivdarstellung des Steckanschlagpunktes der Fig. 3 in einer Entriegelungsstellung;
- Fig. 5: eine schematische Perspektivdarstellung des Steckanschlagpunktes der Fig. 3 zwischen Entriegelungs- und Verriegelungsstellung;
- Fig. 6: eine schematische Perspektivdarstellung eines Betätigungsmechanismus des Steckanschlagpunktes;
- Fig. 7: eine schematische Seitenansicht des Steckanschlagpunktes der Fig. 3 mit entferntem Drehring;
- Fig. 8: eine schematische Perspektivdarstellung eines Sperrkörpers des Steckanschlagpunktes der Fig. 3;
- Fig. 9-11: schematische Darstellungen des Steckanschlagpunktes der Fig. 3 in jeweils einer Aufsicht und einer Seitenansicht zur Erläuterung einer Durchmesserbestimmung mithilfe des Steckanschlagpunktes;
- Fig. 12, 13: schematische Seitenansichten des Steckanschlagpunktes der Fig. 3 zur Erläuterung einer Einstecktiefenbestimmung mithilfe des Steckanschlagpunktes.

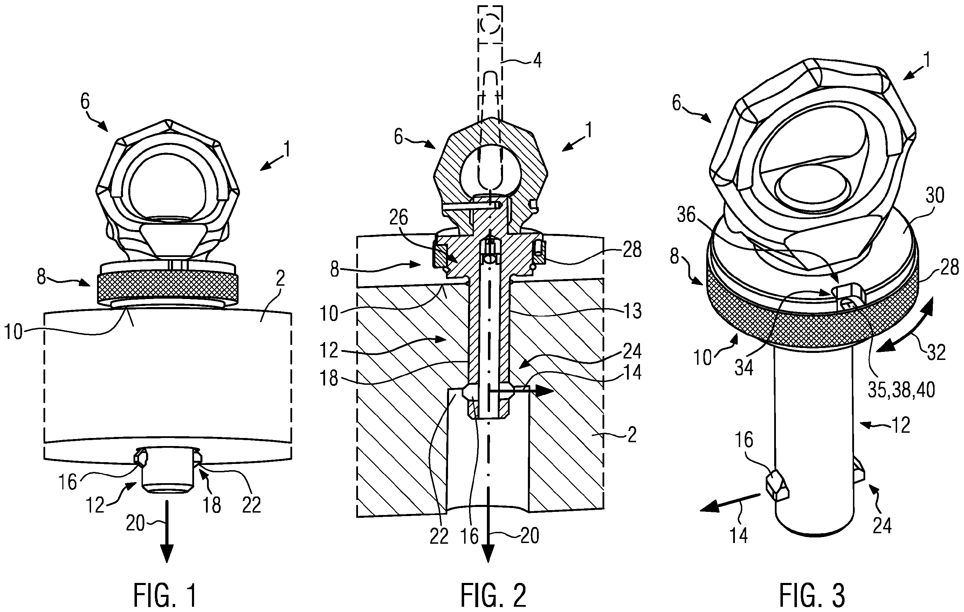

Im Folgenden sind zunächst Aufbau und Funktion eines Steckanschlagpunktes 1 mit Bezug auf die Fig. 1 bis 3 erläutert. In den Fig. 1 und 2 ist der Steckanschlagpunkt in einen nur schematisch wiedergegebenen, jeweils unterschiedlich ausgestalteten Gegenstand 2 eingesteckt. Beim Gegenstand 2 der Fig. 1 handelt es sich um eine Flanschplatte, die vom Steckanschlagpunkt 1 durchragt wird. Der Gegenstand 2 der Fig. 2 weist eine größere Materialstärke auf als der Gegenstand 2 von Fig. 1, so dass ihn der Steckanschlagpunkt 1 nicht durchragen kann.

Der Steckanschlagpunkt 1 dient dazu, ein Anschlag-, Hebe- oder Zurrmittel 4, beispielsweise ein Gurt, ein Seil oder eine Kette, mit dem Gegenstand 2 zu verbinden. Auf diese Weise kann der Gegenstand 2 entweder angehoben, festgezurrt oder zum Festzurren eines am Zurrmittel 4 angebrachten anderen Gegenstandes verwendet werden. Das Anschlag-, Hebe- oder Zurrmittel 4 wird an einem Halteabschnitt 6 des Steckanschlagpunktes 1 angebracht. Der Halteabschnitt 6 ist hierzu augen- oder ösenförmig ausgestaltet.

Ein Sockel 8 des Steckanschlagpunktes 1 weist eine Auflagefläche 10 auf, die beim Einstecken des Steckanschlagpunktes in den Gegenstand 2 zur Anlage an dem Gegenstand 2 gebracht werden kann. Der Sockel 8 bildet insbesondere eine Basis für den Halteabschnitt 6, der einstückig bzw. monolithisch vom Sockel 8 ausgebildet werden kann. Alternativ kann der Halteabschnitt 6 auch von einem separaten, am Sockel 8 befestigten Element gebildet sein.

Auf der vom Halteabschnitt 6 abgewandten Seite des Sockels 8 erstreckt sich ein Sperrbolzen 12 mit seinem Schaft 13 weg vom Halteabschnitt 6. Der Sperrbolzen 12 weist in radialer Richtung 14 ein- und ausfahrbare Sperrkörper 16 auf. Die Anzahl der Sperrkörper 16 bestimmt sich nach der Anwendung. Es können ein oder mehrere Sperrkörper 16 vorhanden sein. Sind mehrere Sperrkörper 16 vorhanden, so sind diese bevorzugt gleichmäßig um den Umfang des Schaftes 13 verteilt angeordnet. Der Schaft 13 weist bevorzugt einen kreiszylindrischen Querschnitt auf. Der Schaft 13 ist bevorzugt glatt und weist kein Gewinde auf.

Der Sperrbolzen 12 wird in ein Loch 18 im Gegenstand 2, beispielsweise eine Bohrung, in einer Einsteckrichtung 20 eingesetzt zu werden. Die Einsteckrichtung 20 stimmt mit einer Längsrichtung des Sperrbolzens 12 bzw. dessen Schaftes 13 überein, so dass für diese beiden Richtungen im Folgenden dasselbe Bezugszeichen verwendet wird. Das Loch 18 muss sich nicht durch den gesamten Gegenstand erstrecken, sondern kann auch, solange es eine Hinterschneidung 22 aufweist, ein Sackloch sein.

Um den Steckanschlagpunkt 1 im Loch 18 zu fixieren, muss diese mit einer Hinterschneidung 22, beispielsweise einem rückspringenden Absatz, versehen sein. Die Hinterschneidung bildet also eine Fläche, die in Einsteckrichtung 20 vom Sockel 8 weg weist. Eine Hinterschneidung 22 kann auch einfach durch das vom Sockel 8 abgewandte Ende des Loches 18 gebildet sein, wie Fig. 1 zeigt. Die Hinterschneidung 22 bildet mit den Sperrkörpern 16 einen Formschluss, der ein Herausziehen des Steckanschlagpunktes 1 entgegen der Steckrichtung 20 verhindert.

Um den Steckanschlagpunkt 1 im Loch 18 zu sichern, sind die Sperrkörper 16 in dem in den Fig. 1 bis 3 gezeigten ausgefahrenen Zustand verriegelt. In einer solchen Verriegelungsstellung 24 können die Sperrkörper 16 in radialer Richtung 14 nicht eingedrückt werden.

Ein Verriegelungsmechanismus 26 dient dazu, den Steckanschlagpunkt 1 von der Verriegelungsstellung 24 in eine weiter unten noch näher beschriebene Entriegelungsstellung zu überführen. In der Entriegelungsstellung können die Sperrkörper 16 in radialer Richtung durch Druck von außen oder selbsttätig einfahren.

Zur Überführung von der Verriegelungsstellung 24 in die Entriegelungsstellung dient ein von Hand betätigbar Drehring 28 am Sockel 8. Der Drehring 28 ist gegenüber dem Halteabschnitt 6 bzw. einem Gehäuse 30 des Sockels 8 bzw. gegenüber dem Sperrbolzen 12 um die Einsteckrichtung 20 herum drehbar, wie durch den Doppelpfeil 32 angedeutet ist. Der Drehring ist vom Halteabschnitt 6, insbesondere dessen Auge, in Einsteckrichtung 20 beabstandet und durch beispielsweise das Gehäuse 30 getrennt.

Eine mechanische Statusanzeige 34 ist ausgestaltet, die Verriegelungsstellung 24 und die Entriegelungsstellung mit unterschiedlichen Signalen optisch anzuzeigen. Der Verriegelungsstellung 24 ist ein anderes optisches Signal der Statusanzeige 34 zugeordnet als der Entriegelungsstellung, so dass die Statusanzeige 34 in der Verriegelungsstellung 24 ein anderes optisches Warnsignal zeigt als in der Entriegelungsstellung. Auf diese Weise kann einem Benutzer der derzeitige Zustand des Steckanschlagpunktes angezeigt werden, was Fehlbedienungen und Betriebsunfälle zu vermeiden hilft. Das in der Verriegelungsstellung 24 von der Statusanzeige 34 erzeugte optische Signal 35 ist in Fig. 3 dargestellt.

Im dargestellten Ausführungsbeispiel weist die Statusanzeige 34 eine Referenzmarkierung 36 beispielsweise in Form eines Sichtfensters 36 im Sockelgehäuse 30 auf. Das Sichtfenster 36 gibt den Blick auf eine mit dem Drehring 28 bewegliche bzw. sich unmittelbar am Drehring 28 befindliche Markierungsfläche 38 frei. In der Verriegelungsstellung 24 ist im Sichtfenster 36 beispielsweise eine erste Markierung 40 sichtbar, die der Verriegelungsstellung 24 zugeordnet ist und die eingenommene Verriegelungsstellung 24 signalisiert. Die erste Markierung 40 kann einen Teilbereich der Markierungsfläche 38 darstellen. Anstelle des Sichtfensters kann selbstverständlich auch eine andere Ausgestaltung, beispielsweise ein Zeiger verwendet werden.

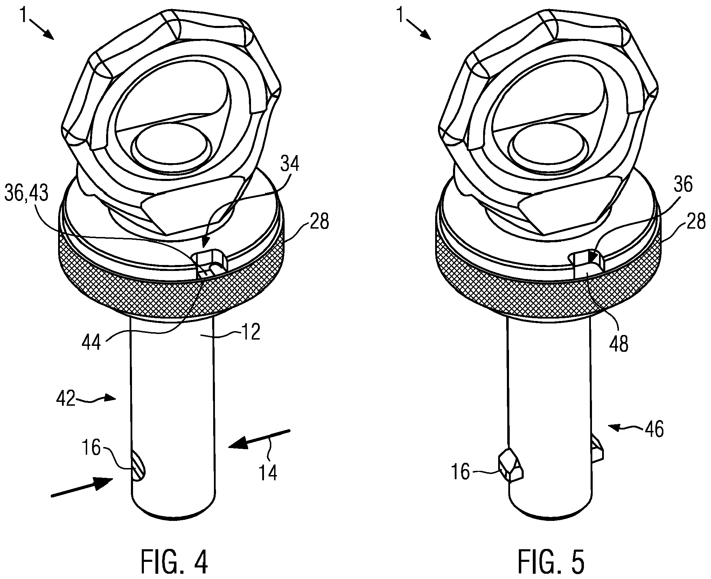

In Fig. 4 ist der Steckanschlagpunkt 1 in der Entriegelungsstellung 42 dargestellt, in der die Sperrkörper 16 in radialer Richtung 14 in den Sperrbolzen 12 um ihren maximalen Betrag eingefahren sind. Die Statusanzeige 34 zeigt ein die Entriegelungsstellung 42 repräsentierendes optisches Signal 43 an.

Die Sperrkörper 16 können vom Verriegelungsmechanismus 26 zwangsgeführt sein, so dass sie in die in Fig. 4 gezeigte Entriegelungsstellung 42 selbsttätig einfahren, wenn der Verriegelungsmechanismus 26 betätigt wird.

Alternativ kann bei nicht vorhandener Zwangsführung der Sperrkörper 16 in der Entriegelungsstellung 42 lediglich eine Verriegelung der Sperrkörper 16 gegenüber der Verriegelungsstellung 24 freigegeben sein, so dass die Sperrkörper 16 in den Sperrbolzen eingedrückt werden können. Dies erfordert jedoch eine spezielle Ausgestaltung der Sperrkörper mit beispielsweise einer Fase, damit die Sperrkörper durch die Hinterschneidung 22 (Fig. 2) beim Herausziehen selbsttätig eingedrückt werden.

Der Steckanschlagpunkt 1 wird durch Drehen des Drehrings 28 von der in Fig. 3 dargestellten Verriegelungsstellung 24 in die Entriegelungsstellung 42 der Fig. 4 überführt. Im Zuge dieser Drehung ändert sich das von der Statusanzeige 34 dargestellte Signal, weil sich beispielsweise die Markierungsfläche 38 unter dem Sichtfenster bewegt.

In der Entriegelungsstellung 42 befindet sich beispielsweise unter dem Sichtfenster 36 eine zweite Markierung 44, die, wie die erste Markierung, Teil der Markierungsfläche 38 sein kann. Dadurch signalisiert die Statusanzeige 34 einem Benutzer, dass sich der Sperrbolzen 12 in der Entriegelungsstellung 42 befindet.

Zwischen der Entriegelungsstellung 42 und der Verriegelungsstellung 24 kann der Steckanschlagpunkt 1 die in Fig. 5 dargestellte Übergangsstellung 46 aufweisen. In der Übergangsstellung 46 befindet sich der Drehring in einer Drehstellung zwischen der Verriegelungsstellung 24 und der Entriegelungsstellung 42. In der Übergangsstellung 46 können die Sperrkörper 16 noch nicht vollständig in den Sperrbolzen 12 bzw. dessen Schaft 13 eingefahren sein bzw. eingedrückt werden. Dies ist bevorzugt erst möglich, wenn die Entriegelungsstellung 42 in der Statusanzeige 34 angezeigt ist.

In der Übergangsstellung 46 zeigt die Statusanzeige 34 bevorzugt ein optisches Signal, das weder in der Verriegelungsstellung 24 noch in der Entriegelungsstellung 42 gezeigt ist. Beispielsweise befindet sich im Sichtfenster 36 eine dritte Markierung 48, die anders ausgestaltet als die erste Markierung 40 und die zweite Markierung 44. Als eine Markierung ist dabei ein Bereich anzusehen, der eine andere Oberfläche, beispielsweise eine andere Oberflächenstruktur und/oder Farbe aufweist, als seine unmittelbare Umgebung. Eine solche Markierung ist somit visuell für einen Benutzer wahrnehmbar.

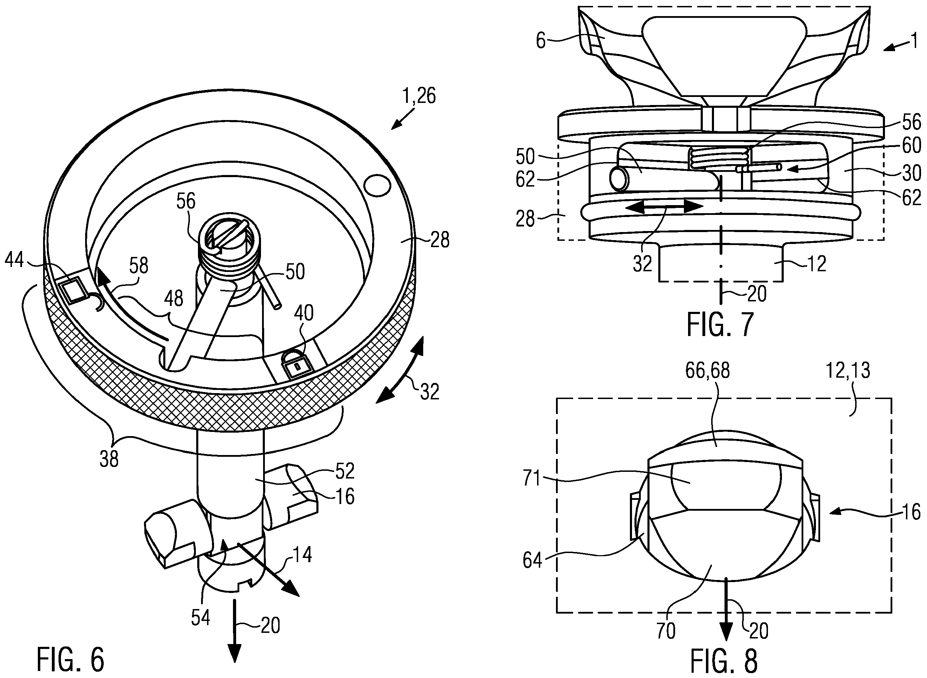

Fig. 6 zeigt den Verriegelungsmechanismus 26 des Steckanschlagpunktes 1. Der Drehring 28 ist über einen hier lediglich beispielhaft stiftförmigen Mitnehmer 50 mit einer im Sperrbolzen 12 (in Fig. 6 weggelassen) drehbar aufgenommenen Verriegelungswelle 52 gekoppelt. Der Mitnehmer 50 erstreckt sich in radialer Richtung 14 und koppelt die Drehung des Drehrings 28 drehstarr mit einer Drehung der Verriegelungswelle 52 um die Einsteckrichtung.

Anstelle einer drehbaren Verriegelungswelle 52 kann alternativ auch eine im Schaft 13 längsverschiebliche Verriegelungswelle 52 verwendet werden. Dies lässt sich auf einfache Weise dadurch erreichen, dass der Mitnehmer 50 an einem seiner Enden in ein Gewinde eingreift, das die Drehbewegung des Drehringes 28 in eine Hubbewegung der Verriegelungswelle übersetzt.

Der Drehring 28 und die Verriegelungswelle 52 sind bevorzugt zwangsgekoppelt, so dass sich beide nicht unabhängig voneinander bewegen können.

Die Sperrkörper 16 liegen an einem Nockenabschnitt 54 der Verriegelungswelle an. Der Nockenabschnitt 54 kann quer zur Einsteckrichtung 20 einen beispielsweise jeweils zumindest abschnittsweise nockenförmigen, exzentrischen, rechteckigen, ellipsenförmigen, ovalen und/oder polygonalen Querschnitt aufweisen. In den übrigen Bereichen der Verriegelungswelle 52 kann deren Querschnitt dagegen kreisförmig sein. Der Querschnitt des Nockenabschnittes 54 liegt in einer Projektion in Einsteckrichtung bevorzugt vollständig innerhalb des Querschnittes der übrigen Verriegelungswelle 52. Der Durchmesser des Nockenabschnittes 54 verändert sich in Umfangsrichtung. Liegen die Sperrkörper 16 an einem großem Durchmesser des Nockenabschnittes 54 an, so sind sich weiter nach außen bewegt, als wenn sie an einem kleinerem Durchmesser des Nockenabschnittes 54 anliegen.

Bevorzugt schnappen die Sperrkörper 16 in der Verriegelungsstellung 24 ein, so dass sie in der Verriegelungsstellung 24 durch eine auf sie in radialer Richtung nach innen wirkende Kraft nicht bewegt werden können. So kann beispielsweise eine dem Nockenabschnitt 54 zugewandte Seite der Sperrkörper 16 ballig und die Flächen des Nockenabschnittes 54, an der die Sperrkörper 16 in der Verriegelungsstellung 24 anliegen, dazu komplementär konkav ausgestaltet sein. Es reicht aber auch aus, wenn die in der Verriegelungsstellung 24 und/oder in der Verriegelungsstellung aneinander liegenden Flächen der Sperrkörper und des Nockenabschnittes 54 plan sind.

Der Nockenabschnitt 54 wirkt in und in einen Bereich um die Verriegelungsstellung 24 mit dem wenigstens einen Sperrkörper 16 selbstsichernd zusammen. Wirkt eine radial nach innen gerichtete Kraft auf den wenigstens einen Sperrkörper 16, so drückt diese Kraft die Verriegelungswelle 52 in die Verriegelungsstellung 24. Der Bereich der Selbstsicherung erstreckt sich von der Verriegelungsstellung 24 aus in Richtung der Entriegelungsstellung 42. Bevorzugt erstreckt sich der Bereich, in der der Nockenabschnitt 54 selbstsichernd ist, über wenigstens die Hälfte des Bereichs, den die Verriegelungswelle 52 bei ihrer Bewegung von der Verriegelungsstellung 24 in die Entriegelungsstellung 42 überstreicht.

Zumindest in der Entriegelungsstellung 42 und/oder in einem sich um die Entriegelungsstellung 42 erstreckenden Bereich von Stellungen der Verriegelungswelle 52 kann der Nockenabschnitt selbstöffnend ausgestaltet sein. Der Bereich von Stellungen, in der der Nockentrieb selbstöffnend ist, sollte von der Verriegelungsstellung beabstandet sein bzw. zumindest diese nicht umfassen. Bevorzugt schließt sich der Bereich, in dem der Nockentrieb selbstöffnend ist, an den Bereich, in dem der Nockentrieb selbstsichernd ist, an, wobei beide Bereich auch voneinander beabstandet sein können. In dem Bereich, der Selbstöffnung ist beispielsweise die Verriegelungswelle 52 durch eine Kraft, die auf den wenigstens einen Sperrkörper 16 in radialer Richtung nach innen wirkt, in die Entriegelungsstellung 42 gedrückt. Dadurch können die Sperrkörper 16 außerhalb der Verriegelungsstellung bzw. außerhalb des Bereichs der Selbstsicherung durch eine solche Kraft selbsttätig in den Schaft gedrückt werden, was das Herausziehen des Schaftes aus dem Loch erleichtert.

Eine Feder 56, beispielsweise eine Schenkelfeder, stützt sich am Gehäuse 30 des Sockels (in Fig. 6 nicht gezeigt) ab und übt eine in Richtung der Verriegelungsstellung 24 gerichtete Federkraft 58 bzw. ein in Richtung der Verriegelungsstellung 24 gerichtetes Drehmoment 58 auf die Verriegelungswelle 52 aus. Im kraftfreien Zustand nimmt der Steckanschlagpunkt 1 folglich selbsttätig die Verriegelungsstellung 24ein.

Zu erkennen ist in Fig. 6 noch, dass die Markierungsfläche 38 bei diesem Ausführungsbeispiel sich unmittelbar am Drehring 28 befindet. Die erste Markierung 40 und die zweite Markierung 44 liegen an den in Drehrichtung 32 gelegenen Enden der Markierung 48. Die dritte Markierung 48 erstreckt sich zwischen der ersten Markierung 40 und der zweiten Markierung 44.

Fig. 7 zeigt das Sockelgehäuse 30 des Steckanschlagpunktes 1 bei weggelassenem Drehring 28. Zu erkennen ist, dass im Gehäuse 30 eine beispielsweise kreissektorförmige Aussparung 60 ausgebildet sein kann, in der der Mitnehmer 50 in Drehrichtung 32 um die Einsteckrichtung 20 herum verschwenkbar aufgenommen ist. Die beiden sich in Drehrichtung 32 gegenüberliegenden Wandabschnitte 62 der Aussparung 60 dienen als Anschlag für den Mitnehmer 50 und begrenzen den Hub der Drehbewegung 32 des Drehringes 28. Einer der Wandabschnitte 62 kann zudem zur Abstützung der Feder 56 dienen.

Fig. 8 zeigt beispielhaft einen Sperrkörper 16, der durch eine Schaftöffnung 64 des Sperrbolzens 12 bzw. dessen Schaftes 13 ragt. Durch beispielsweise Abdrücken des Randes der Schaftöffnung 64 und einen sich innerhalb des Schaftes 13 weitende Form der Sperrkörper 16 lassen sich letztere am Schaft 13 sichern. Die Abdrückung hält den Sperrkörper 16 formschlüssig in der Schaftöffnung 64, so dass dieser nicht aus der Schaftöffnung 64 herausfallen kann. Zusätzlich kann die Abdrückung den Sperrkörper 16 durch Formschluss an einer Drehung in der Schaftöffnung um eine radial verlaufenden Rotationsachse hindern, so dass er stets gleich ausgerichtet ist.

Sofern der Sperrkörper 16 vom Verriegelungsmechanismus 26 zwangsgeführt ist, kann er jede Form einnehmen. Beispielsweise kann der Sperrkörper 16 kugelförmig sein. Bevorzugt weist jedoch eine entgegen der Einsteckrichtung 20 zum Sockel 8 hin weisende Oberseite 66 des Sperrkörpers eine Form auf, die eine möglichst flächige Anlage an der Hinterschneidung ermöglicht.

Beispielsweise kann die Oberseite 66 als eine sich senkrecht zur Einsteckrichtung 20 erstreckende plane Fläche ausgestaltet sein. Eine solche Fläche liegt vollflächig an der Hinterschneidung 22 an. Bei einer solchen Ausführung kann der wenigstens eine Sperrkörper 16 nicht durch eine in Längsrichtung des Loches wirkende Zugkraft nach innen in den Schaft gedrückt werden.

Um das Einfahren der Sperrkörper in den Schaft 13 zu unterstützen, kann in einer Ausgestaltung die Oberseite 66 zumindest eine Fase 68 aufweisen bzw. vollständig als Fase ausgestaltet sein. Bevorzugt ist eine solche Fase 68 leicht ballig bzw. konvex geformt, so dass sie sich an den kantenförmigen Übergang zwischen der Hinterschneidung 22 und des Loches 18 anschmiegt und keinen punktuellen Druck ausübt.

An der in Einsteckrichtung 20 weisenden Unterseite 70 eines Sperrkörpers 16 kann ebenfalls eine Fase vorhanden oder die gesamte Unterseite 70 als Fase ausgestaltet sein, um das Einstecken in das Loch 18 zu vereinfachen.

Die Fase 68 an der Oberseite eines Sperrkörpers 16 weist bevorzugt eine Neigung gegenüber der Einsteckrichtung 20 auf, die nicht zu einer Selbsthemmung führt. Vorzugsweise kann die Oberseite des Sperrkörpers 16 gegenüber der Einsteckrichtung 20 eine Neigung von 45° haben. Insbesondere kann die Fase 68 auf der Oberseite 66 eines Sperrkörpers 16 weniger stark gegenüber der Einsteckrichtung 20 geneigt sein als die Fase an der Unterseite 70.

Ein Sperrkörper 16 kann zudem eine radial nach außen weisende Stirnfläche 71 aufweisen. Die Stirnfläche 71 kann zumindest abschnittsweise einer Kreiskontur um die Einsteckrichtung 20 herum folgen, so dass sie sich an die Innenfläche des Loches 18 anschmiegt. Ein Teil der Stirnfläche 71 kann auch plan ausgeführt sein und senkrecht zur radialen Richtung 14 ausgerichtet sein.

Der Steckanschlagpunkt 1 ist üblicherweise nur für einen bestimmten Bereich von Innendurchmessern des Loches 18 zugelassen bzw. zertifiziert. Eine Verwendung des Steckanschlagpunktes 1 in einem Loch 18, dessen Durchmesser nicht in diesem zulässigen Bereich liegt, ist nicht bestimmungsgemäß und kann zu Sach- und Personenschäden führen.

Ist beispielsweise der Innendurchmesser des Loches 18 zu groß, so kann sich der Sperrbolzen 12 bei schräg wirkender Belastung im Loch 18 schräg stellen. Bei Lastrichtungswechseln kann der Sperrbolzen 18 dadurch hin und her schlagen, was zum Bruch des Sperrbolzens 12 oder einer Beschädigung des Verriegelungsmechanismus 26 führen kann. Zudem kann ein zu großer Innendurchmesser des Loches 18 eine zu kleine Auflagefläche zwischen den Sperrkörpern 16 und der Hinterschneidung 22 bewirken. Im Extremfall ist der Innendurchmesser des Loches 18 so groß, dass die Sperrkörper 16 nicht oder nicht mehr ausreichend tief hinter die Hinterschneidung 22 fahren können, so dass sich der Steckanschlagpunkt 1 lösen kann.

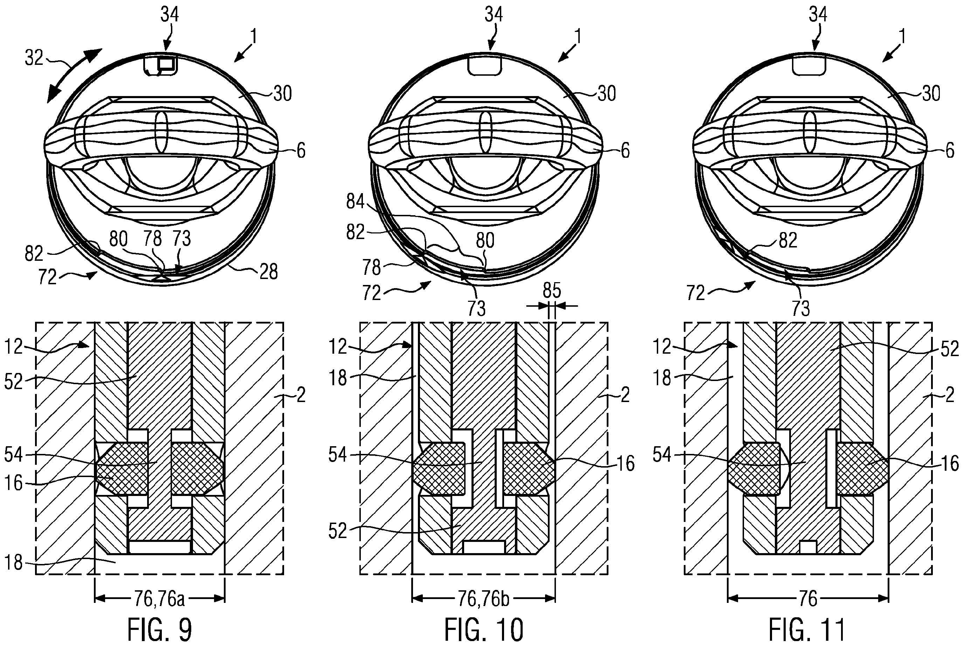

Um dem Benutzer ohne zusätzliches Werkzeug eine rasche Überprüfung zu ermöglichen, ob der Innendurchmesser des Loches 18 im zulässigen Bereich liegt, kann in den Steckanschlagpunkt 1 eine Durchmessergrenzlehre 72 integriert sein, deren Funktion im Folgenden anhand der Fig. 9 bis 11 erläutert ist. Die Sperrkörper 16 sind dabei bevorzugt Teil der Durchmessergrenzlehre 72 und werden zur Bestimmung des Innendurchmessers 76 des Loches 18 benutzt.

Der zulässige Mindestdurchmesser 76a (Fig. 9) liegt dann vor, wenn sich der Schaft 13 des Sperrbolzens 12 minimal einstecken lässt. In diesem Fall sind die Sperrkörper 16 vollständig in den Schaft 13 des Sperrbolzens 12 eingefahren und durch das Loch 18 in der vollständig eingefahrenen Position gehalten. Dies entspricht der Entriegelungsstellung 42, die entsprechend in der Statusanzeige 34 angezeigt wird, sofern eine solche vorhanden ist, wenn sich die Sperrkörper 16 noch im Loch 18 mit dem minimalen Durchmesser 76a befinden.

Die Durchmessergrenzlehre 72 kann - ähnlich wie die Statusanzeige 34 - eine mechanische Durchmesseranzeige 73 aufweisen, die ein vom Innendurchmesser des Loches 18 abhängiges optisches Signal angibt. Die Durchmesseranzeige 73 signalisiert einem Benutzer so, ob sich der Innendurchmesser des Loches 18 im zulässigen Bereich befindet.

Die Durchmesseranzeige 73 kann eine Messreferenzmarke 78 in Form beispielsweise eines Zeigers, einer Aussparung oder eines Sichtfensters aufweisen. Ferner kann die Durchmesseranzeige 73 eine erste Messmarkierung 80 und eine optional auch eine zweite Messmarkierung 82 aufweisen, die beide relativ zur Messreferenzmarke beweglich, drehbar sind. Die Messreferenzmarke 78 kann beispielsweise mit dem Drehring drehbar sein, während die erste und zweite Messmarkierung 80, 82 gehäusefest sein können die erste und zweite Messmarkierung 80, 82. Alternativ können Insbesondere kann eine Messmarkierung drehstarr mit dem Drehring 28 verbunden sein, mit dem Drehring drehbar sein, während die Messreferenzmarke 78 gehäusefest ist. So kann die Messreferenzmarke 78 direkt an dem Drehring angebracht sein.

Wie Fig. 9 zeigt, können die erste und die zweite Messmarkierung 80 in Drehrichtung 30 gelegene Enden eines Messmarkierungsbereiches 84 bilden. Der Messmarkierungsbereich 84 befindet sich beispielsweise am Sockelgehäuse 30, wenn sich die Messreferenzmarkierung 78 am Drehring 28 befindet. Befindet sich die Messreferenzmarkierung 78 am Sockelgehäuse 30, so befindet sich der Messmarkierungsbereich 84 am Drehring 28. Der Messmarkierungsbereich 84 kann als eine Aussparung, ein Fenster oder ein Bereich mit im Vergleich zu seiner unmittelbaren Umgebung anders ausgestalteter Oberfläche und/oder Farbe ausgestaltet sein.

Die erste Messmarkierung 80 kann dem kleinsten noch zulässigen Durchmesser, dem Mindestdurchmesser 76a zugeordnet sein. Hat das Loch 18 den Mindestdurchmesser 76a, so befindet sich die Messreferenzmarke 78 an der ersten Markierung 80 (Fig. 9). Der Drehring 28 lässt sich aus dieser Stellung nicht weiter drehen, da die Drehung der Verriegelungswelle 52 am Nockenabschnitt 54 durch die Sperrkörper 16 blockiert ist.

Wird der Steckanschlagpunkt 1 in ein Loch 18 eingeführt, dessen Durchmesser 76 dem maximal zulässigen Durchmesser, dem Maximaldurchmesser 76b, entspricht, so können die Sperrkörper 16 nicht vollständig, sondern nur um einen vorbestimmten Betrag 85 aus dem Schaft 13 des Sperrbolzens 12 herausfahren (Fig. 10). Der Drehring 28 und die Verrieglungswelle 52 werden von der Feder 56 angetrieben. Der Sperrkörper 16 folgt dieser Bewegung, bis er an der Innenfläche des Lochs 18 anliegt. Dadurch verändert sich die relative Lage der Messreferenzmarke 78 zur ersten und zweiten Messmarkierung 80, 82. Die zweite Messmarkierung ist dem Maximaldurchmesser 76b zugeordnet. Beim Maximaldurchmesser 76b liegt die zweite Messmarkierung 82 an der Messreferenzmarke 78.

Hat das Loch 18 einen Durchmesser, der zwischen dem minimalen Durchmesser 76a und dem maximalen Durchmesser 76b ist, liegt die Messreferenzmarke 78 entsprechend zwischen der ersten Messmarkierung 80 und der zweiten Messmarkierung 82.

Wird der Steckanschlagpunkt 1 in ein Loch 18 eingesteckt, deren Durchmesser 76 größer als der maximale Durchmesser 76b und damit unzulässig groß ist, so fahren die Sperrkörper 16 noch weiter in radialer Richtung 14 aus als beim Maximaldurchmesser 76b (Fig. 11). Entsprechend liegt die zweite Messmarkierung 82 nunmehr zwischen der ersten Messmarkierung 80 und der Messreferenzmarkierung 78. Die Messreferenzmarkierung 78 liegt nicht mehr in dem Messmarkierungsbereich 84, der dem Bereich der zulässigen Durchmesser 76, also dem Bereich zwischen dem minimalen Durchmesser 76a und dem maximalen Durchmesser 76b zugeordnet ist. Der Benutzer kann mithilfe der Durchmessergrenzlehre 72 und der Durchmesseranzeige 73 also auf dem ersten Blick erkennen, dass das Loch 18, wie sie in Fig. 11 dargestellt ist, einen zu großen Durchmesser hat.

Auch die Einstecktiefe ist für die Betriebssicherheit relevant. Damit der Steckanschlagpunkt 1 sicher am Gegenstand 2 angebracht werden kann, darf die Entfernung zwischen der dem Sockel 8 zugewandten Seite des Gegenstandes 2 und der Hinterschneidung 22 weder zu klein noch zu groß sein.

Ist diese Entfernung zu klein, so kann der Steckanschlagpunkt 1 in Einsteckrichtung 20 hin- und hergeschoben werden. Wirkt auf den Steckanschlagpunkt 1 eine Zugkraft, so wird er aus dem Loch 18 gezogen, bis die Sperrkörper 16 gegen den Hinterschneidung anschlagen. Eine im Winkel zur Einsteckrichtung 20 verlaufende Kraft führt zu einer unzulässig hohen Biegung im herausragenden Schaft 13 des Sperrbolzens, die zur Beschädigung des Sperrbolzens 12, dessen Verriegelungsmechanismus 26 oder sogar zu dessen Bruch führen kann, wenn der Sockel 8 zu weit vom Gegenstand 2 beabstandet ist. Lastwechsel können zu einer Bewegung des Steckanschlagpunktes und hohen dynamischen Lasten führen.

Ist die Entfernung zur Hinterschneidung 22 dagegen zu groß, kann der Steckanschlagpunkt 1 nicht im Loch 18 arretieren und damit nicht benutzt werden.

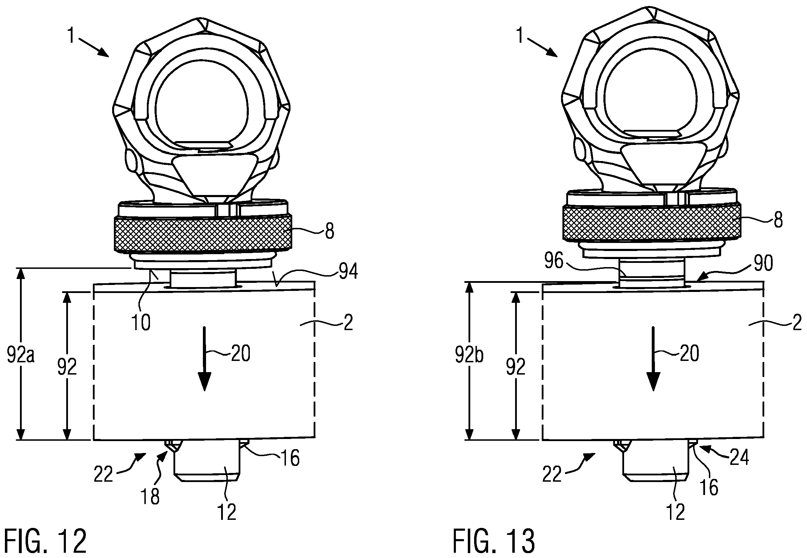

Damit der Benutzer auf einfache Weise und ohne zusätzliches Werkzeug feststellen kann, ob sich der Hinterschneidung 22 am Gegenstand 2 in einer zulässigen Position befindet, kann der Steckanschlagpunkt 1 mit einer Einstecktiefenlehre 90 versehen sein, die nun mit Bezug auf die Fig. 12 und 13 beschrieben ist.

Die Einstecktiefe 92, also die Materialstärke des Gegenstandes 2 zwischen der Hinterschneidung 2 und einer der Auflagefläche 10 gegenüberliegenden Fläche 94 des Gegenstandes 2 darf nicht kleiner als eine Mindesteinstecktiefe und nicht größer als eine Maximaleinstecktiefe sein. Die Maximaleinstecktiefe entspricht höchstens dem Abstand in Einsteckrichtung 20 zwischen der Oberseite der voll ausgefahrenen Sperrkörper 16 und der Auflagefläche 10.

Ist die Einstecktiefe 92 größer als die Maximaleinstecktiefe, so lässt sich der Steckanschlagpunkt 1 nicht in die Verriegelungsstellung überführen, wenn er vollständig in das Loch 18 eingeführt ist. In diesem Fall kann der Benutzer anhand der Statusanzeige 34 sofort erkennen, dass die Verriegelungsstellung 24 nicht eingenommen werden kann.

In Fig. 12 liegt die Einstecktiefe 92 im zulässigen Bereich, also zwischen der Mindesteinstecktiefe 92b und der Maximaleinstecktiefe 92a.

Ist dagegen die Einstecktiefe 92 kleiner als die Mindesteinstecktiefe 92b, wie in Fig. 13 dargestellt ist, so ist bei sich in der Verriegelungsstellung 24 befindlichem Steckanschlagpunkt 1 eine Mindesteinstecktiefenmarkierung 96 der Einstecktiefenlehre 90 zu erkennen. Hierzu muss der im Loch arretierte Steckanschlagpunkt 1 entgegen der Einsteckrichtung 20 vollständig aus dem Loch 18 gezogen werden, bis die Sperrkörper 16 an der Hinterschneidung 22 anliegen. Ist die Mindesteinstecktiefenmarkierung 96 zu sehen, weiß der Benutzer sofort, dass die zulässige Mindesteinstecktiefe 92b unterschritten ist.

Die Einstecktiefenmarkierung 96 befindet sich am Schaft 13 des Sperrbolzens 12. Sie ist bei der dargestellten Ausführungsform um die Mindesteinstecktiefe 92b in Einsteckrichtung 20 von der Oberseite der ausgefahrenen Sperrkörper 16 beabstandet. Die Einstecktiefenmarkierung 96 ist nur zu sehen, wenn die Mindesteinstecktiefe 92b unterschritten ist.

Die Mindesteinstecktiefenmarkierung 96 ist ein optisch von seiner unmittelbaren Umgebung abgegrenzter Bereich, der insbesondere ringförmig ausgestaltet sein kann. Beispielsweise kann die Mindesteinstecktiefenmarkierung 96 als eine Ringnut und/oder als ein ringförmiger Bereich mit gegenüber seiner Umgebung abgeänderter Oberflächenstruktur oder -farbe ausgestaltet sein.

### Bezugszeichen

- 1: Steckanschlagpunkt
- 2: Gegenstand
- 4: Anschlag-, Hebe- oder Zurrmittel
- 6: Halteabschnitt
- 8: Sockel
- 10: Auflagefläche
- 12: Sperrbolzen
- 13: Schaft des Sperrbolzens
- 14: radiale Richtung
- 16: Sperrkörper
- 18: Loch
- 20: Einsteckrichtung / Längsrichtung
- 22: Hinterschneidung
- 24: Verriegelungsstellung
- 26: Verriegelungsmechanismus
- 28: Drehring
- 30: Sockelgehäuse
- 32: Doppelpfeil / Drehrichtung des Drehringes
- 34: Statusanzeige
- 35: optisches Signal der Statusanzeige in der Verriegelungsstellung
- 36: Referenzmarkierung
- 38: Markierungsfläche
- 40: erste Markierung
- 42: Entriegelungsstellung
- 43: für die Entriegelungsstellung repräsentatives optisches Signal der Statusanzeige
- 44: zweite Markierung
- 46: Übergangsstellung
- 48: dritte Markierung
- 50: Mitnehmer
- 52: Verriegelungswelle
- 54: Nockenabschnitt
- 56: Feder
- 58: Federkraft / Drehmoment
- 60: Aussparung
- 62: Wandabschnitt
- 64: Schaftöffnung
- 66: Oberseite
- 68: Fase
- 70: Unterseite
- 71: Stirnfläche
- 72: Durchmessergrenzlehre
- 73: Durchmesseranzeige
- 76: Innendurchmesser
- 76a: minimal zulässiger Innendurchmesser
- 76b: maximal zulässiger Innendurchmesser
- 76c: zu großer Durchmesser
- 78: Messreferenzmarkierung
- 80: erste Messmarkierung
- 82: zweite Messmarkierung
- 84: Messmarkierungsbereich
- 85: Betrag, um den Sperrkörper ausgefahren ist
- 90: Einstecktiefenlehre
- 92: Einstecktiefe
- 92a: Maximaleinstecktiefe
- 92b: Mindesteinstecktiefe
- 94: Fläche
- 96: Mindesteinstecktiefenmarkierung

## Patentansprüche

1. Steckanschlagpunkt (1)
mit einem Sperrbolzen (12), der einen in einer Einsteckrichtung (20) in ein Loch (18) eines Gegenstandes (2) einsetzbaren Schaft (13) und wenigstens einen am Schaft in radialer Richtung (14) ein- und ausfahrbaren Sperrkörper (16) aufweist;
mit einem Sockel (8), der eine Auflagefläche (10) zur Anlage am Gegenstand (2) aufweist und von dem sich der Sperrbolzen (12) in der Einsteckrichtung (20) weg erstreckt;
und mit einem Halteabschnitt (6) zum Anbringen eines Anschlag-, Zurr- oder Hebemittels (4), der sich an der dem Sperrbolzen (12) gegenüberliegenden Seite des Sockels (8) befindet;
wobei der Sockel (8) einen von Hand betätigbar angeordneten, zwischen einer Verriegelungsstellung (24) und einer Entriegelungsstellung (42) gegenüber dem Sperrbolzen (12) drehbaren Drehring (28) aufweist, der zur Überführung des Sperrbolzens (12) in die Verriegelungsstellung (24) mechanisch mit dem Sperrbolzen (12) verbunden ist; und
wobei in der Verriegelungsstellung (24) der wenigstens eine Sperrkörper (16) radial ausgefahren verriegelt ist.

2. Steckanschlagpunkt (1) nach Anspruch 1,
wobei der Sperrbolzen (12) eine im Schaft (13) drehbar aufgenommene Verriegelungswelle (52) aufweist, die mit dem Drehring (28) und durch diesen drehbar verbunden ist; und
wobei die Verriegelungswelle (52) mit einem Nockenabschnitt (54) versehen ist, der bei Drehung (32) des Drehringes (28) den wenigstens einen Sperrkörper (16) radial nach au-ßen in die Verriegelungsstellung (24) drückt.

3. Steckanschlagpunkt (1) nach Anspruch 2,
wobei der wenigstens eine Sperrkörper (16) in radialer Richtung (14) mittels Magnetkraft an der Verriegelungswelle (52) gehalten ist.

4. Steckanschlagpunkt (1) nach einem der Ansprüche 1 bis 3,
wobei der wenigstens eine Sperrkörper (16) in und/oder entgegen der Einsteckrichtung (20) mit einer Fase (68) versehen ist.

5. Steckanschlagpunkt (1) nach einem der Ansprüche 1 bis 4,
wobei der Steckanschlagpunkt (1) eine mechanisch betätigte Statusanzeige (34) aufweist, die ausgestaltet ist, in der Verriegelungsstellung (24) ein optisches Statussignal (35) zu erzeugen, das in einer Entriegelungsstellung (42) nicht sichtbar ist.

6. Steckanschlagpunkt (1) nach Anspruch 5,
wobei die Statusanzeige (34) eine Referenzmarkierung (36) und eine relativ zur Referenzmarkierung (36) bewegliche Markierungsfläche (38) mit einer ersten Markierung (40) und einer zweiten Markierung (44) aufweist;
wobei sich in der Verriegelungsstellung (24) die erste Markierung (40) und in der Entriegelungsstellung (42) die zweite Markierung (44) an der Referenzmarkierung (36) befindet.

7. Steckanschlagpunkt (1) nach Anspruch 5 oder 6, wobei
die Markierungsfläche (38) oder die Referenzmarkierung (36) mit dem Drehring (28) bewegungsübertragend verbunden ist.

8. Steckanschlagpunkt (1) nach einem der Ansprüche 1 bis 7,
wobei der Schaft (13) in Einsteckrichtung (20) zwischen dem wenigstens einen Sperrkörper (16) und der Auflagefläche (10) außen mit einer Einstecktiefen-Markierung (96) versehen ist, die sich in Einsteckrichtung (20) näher an der Auflagefläche (10) als an den Sperrkörpern (16) befindet.

9. Steckanschlagpunkt (1) nach Anspruch 8,
wobei der Steckanschlagpunkt (1) für einen bestimmungsgemäßen Gebrauch einem Loch (18) ausgestaltet ist, bei dem sich eine Hinterschneidung (22), in die der wenigstens eine Sperrkörper (16) in der Verriegelungsstellung (24) einfahrbar ist, in einer Einstecktiefe (92) befindet, die wenigstens einer Mindesteinstecktiefe (92b) und höchstens einer Maximaleinstecktiefe (92a) entspricht,
und wobei der Abstand der Einstecktiefen-Messmarkierung (96) von den Sperrkörpern (16) der Mindesttiefe (92b) entspricht.

10. Steckanschlagpunkt (1) nach einem der Ansprüche 1 bis 9,
wobei in den Steckanschlagpunkt (1) eine Durchmessergrenzlehre (72) zur Prüfung eines Innendurchmessers (76) des Loches (18) integriert ist.

11. Steckanschlagpunkt (1) nach Anspruch 10,
wobei der wenigstens eine Sperrkörper (16) Teil der Durchmessergrenzlehre (72) ist.

12. Steckanschlagpunkt (1) nach einem der Ansprüche 1 bis 11,
wobei der Steckanschlagpunkt (1) eine Messmarkierung (80) und eine relativ zur Messmarkierung (80) bewegliche Messreferenzmarkierung (78) aufweist und
wobei sich die Messmarkierung (80) an der Messreferenzmarke (78) befindet, wenn der wenigstens eine Sperrkörper (16) um einen vorbestimmten Betrag (85) aus dem Schaft (13) ausgefahren ist.

13. Steckanschlagpunkt (1) nach Anspruch 12,
wobei der vorbestimmte Betrag (85) einem maximal zulässigen Innendurchmesser (76b) eines Loches (18) entspricht, der für die bestimmungsgemäße Verwendung des Steckanschlagpunkts (1) noch zulässig ist.

14. Steckanschlagpunkt (1) nach den Ansprüchen 10 bis 13, wobei die Messmarkierung (80) und die Messreferenzmarkierung (82) Teil der Durchmessergrenzlehre (72) sind.
